# EUROPEAN PATENT APPLICATION

(11) **EP 1 167 405 A2**
(43) Date of publication of application: **02.01.2002**
(21) Application number: 01303803.9
(22) Date of filing: 26.04.2001
(51) Int. Cl.: C08F 283/12, C08F 291/00, C08B 15/00, C08G 83/00

(54) **Dendrimer-based interpenetrating polymer networks**

(30) Priority: 02.05.2000 US 562171
(71) Applicant: Dow Corning Corporation, Midland, MI 48611-0994 (US); Michigan Molecular Institute, Midland, Michigan 48642 (US)
(72) Inventor: Boileau, Sylvie, 75013 Paris (FR); Dvornic, Petar Radivoj, Midland, Michigan 48640 (US); Hemonic, Isabelle, 78260 Acheres (FR); Owen, Michael James, Midland, Michigan 48640 (US); Parham, Paul Lane, Midland, Michigan 48642 (US); Reeves, Scott Daniel, Midland, Michigan 48640 (US); Pickelman, Dale Martin, Auburn, Michigan 48611 (US); Teyssie, Dominique, 78230 Le Pecq (FR); Vidal, Frederic, 78280 Guyancourt (FR)
(74) Representative: Kyle, Diana

(57) **Abstract**

Compositions of matter of interpenetrating polymer networks (IPN) containing two or more polymer components of which at least one polymer component is a network in the form of a dendrimer or dendritic polymer. The other polymer component is a dendrimer, dendritic polymer, hyperbranched polymer, non-crosslinked poly-branched polymer having comb-burst configuration, a regularly branched polymer, randomly branched polymer, or linear polymer. The network polymer component is synthesized or crosslinked in the presence of the other polymer component. The IPN can be a full IPN, a sequential IPN, a simultaneous IPN, a thermoplastic IPN, a semi-IPN, or a pseudo-IPN.

## Description

This invention is directed to a new class of macromolecular architecture, and to compositions which are permanently interpenetrating systems of at least two network components, at least one network component of which is dendrimer-based or dendritic polymer-based. The other network component may have the same, similar, or different type of macromolecular architecture, including but not limited to the same, other dendrimer, hyperbranched polymer, Comb-burst™ polymer, regular or random branched polymers, and linear polymer.

The invention also includes macromolecular architectures in which the one component interpenetrating with the dendrimer network component may not constitute a network, but may consist of a noncrosslinked polymer, the macromolecules of which are long enough to thoroughly entangle with the dendrimer network, so as to create a system which shows no tendency toward self-separation.

An interpenetrating polymer network (IPN) is an intimate combination of at least two polymers both of which are in network form, and wherein at least one of the polymer networks is synthesized or crosslinked in the immediate presence of the other polymer network. Generally, there are no induced covalent bonds between the two polymers, i.e., the monomer A reacts only with the other molecules of monomer A, and the monomer B reacts only with the other molecules of monomer B.

Thus, in what has been termed "sequential synthesis", crosslinked polymer A is swollen in the presence of monomer B and a crosslinking agent, and B is polymerized. In what has been termed "simultaneous synthesis", monomers A and B are crosslinked and polymerized by noninterfering modes.

In addition to mechanical blending and copolymerization, IPN's represent a third mechanism by which different polymers can be physically combined.

Compositions of this nature have been classified as full IPNs, sequential IPNs (SIPN), simultaneous IPNs (SIN), thermoplastic IPNs, semi-IPNs, and pseudo-IPNs. A full IPN has been defined as any material containing two or more polymer networks in which there are no induced crosslinks between the individual polymer networks. A sequential IPN has been defined as any material prepared by a method in which crosslinked polymer A is swollen in monomer B, its crosslinking agent and initiator, and B is polymerized and crosslinked in situ. A simultaneous IPN has been defined as any material prepared by a method in which monomers A and B, their respective crosslinking agents and initiators, are polymerized and crosslinked simultaneously by means of a noninterfering mode. A thermoplastic IPN is a two polymer IPN in which the individual polymer networks are thermoplastic. The polymers may contain physical crosslinks, e.g., ionomers joining two or more chains together or as phase separated single polymer systems. A semi-IPN is a sequential IPN in which one polymer component is crosslinked and the other polymer component is linear. A pseudo-IPN is a simultaneous IPN in which one polymer is a network, i.e., crosslinked, and the other polymer is linear.

While IPNs containing organosilicon compositions are know in the art, for example in US Patent 5173290 (December 22, 1992), such IPNs do not contain dendrimers, nor do they contain dendrimers having silicon atoms. In fact, there are no true dendrimer-based IPNs reported in the literature.

Accordingly, this invention relates to architecturally novel interpenetrating polymer networks (IPNs) containing at least one dendritic polymer network component, and another dendritic or non-dendritic polymer network component. While the dendritic polymer is preferably a dendrimer, it may consist of a hyperbranched or Comb-burst™ type polymer. The non-dendritic component may consist of a network such as networks obtained from linear, cyclic, regular or random branched, or like polymer precursors.

In particular, the invention relates to combinations of radially layered copoly(amidoamine-organosilicon) (PAMAMOS) dendrimer-based networks interpenetrating with crosslinked poly(methyl-methacrylate)(PMMA) and cellulose acetobutyrate (CAB) networks.

In addition, the invention includes semi-IPNs of cross-linked PAMAMOS dendrimer-based networks physically entangled with linear cellulose acetobutyrate chains. It is believed that these compositions are the first truly interpenetrating networks involving dendritic polymers, and that they represent a completely new class of macromolecular architecture in which dendritic and non-dendritic components are intimately and permanently combined at supermolecular levels.

The incorporation of dendrimer-based networks into an IPN system provides for effective control, and represents a significant improvement in their dimensional stability and mechanical properties. Moreover, dilution of dendrimer-networks by inclusion of non-dendrimer components in an IPN system such as described herein, lowers the cost of such material on a unit basis, and enables better economy while at the same time retaining the unique and desirable properties of the dendrimer.

Some examples, therefore, of these beneficial properties include scavenging, i.e., adsorbing, and the controlled release of active species in personal and environmental protection, catalysis, membrane reactors, drug delivery, gene therapy, agriculture, electronics, opto-electronics, formation of metal containing nanocomposites, rare and precious metal harvesting, water purification including nuclear reactor waste water treatment, liquid and gas separation.

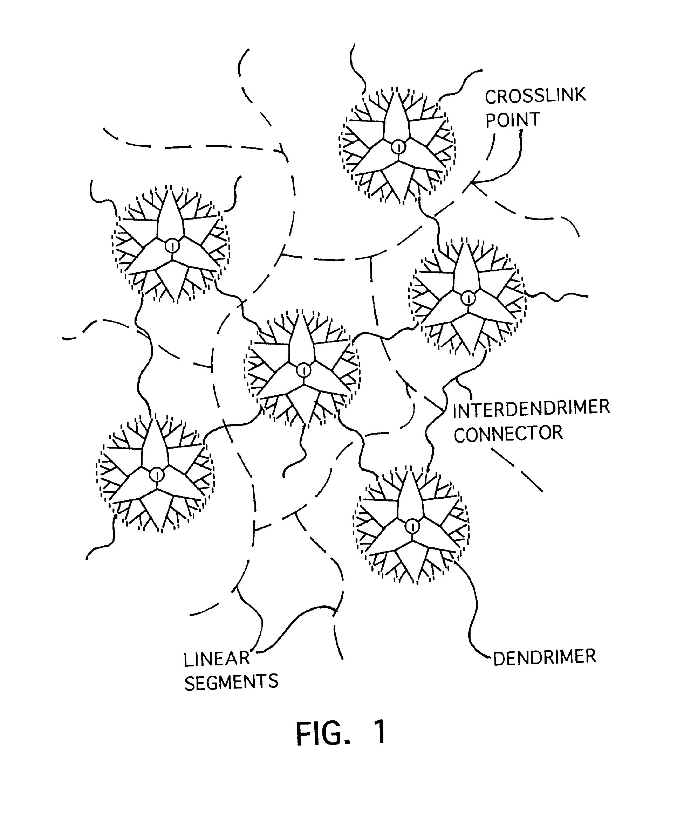

Figure 1 is a schematic representation of an IPN according to this invention containing one dendrimer based component and one linear polymer based component.

It can be seen in Figure 1 that both components represent continuous networks. The dendrimer-based network consists of dendrimers, and it may or may not contain interdendrimer connectors which represent the residues of crosslinking coreagents. The linear polymer-based network consists of linear segments and crosslinking points. These networks cannot be separated without breaking their chemical bonds.

As noted above, the present invention is directed to what is believed to be the first successful preparation of a true dendrimer-based interpenetrating polymer network. The compositions obtained herein represent a new class of macromolecular architecture including a variety of different compositions.

In the most general sense, therefore, these dendritic polymer-based IPNs involve at least two network components, one network component of which is a dendritic polymer network obtained by crosslinking various types of dendritic polymer precursors, such as hyperbranched polymers, Combburst™ polymers, dendrons, and dendrimers. The other network component of the IPN is a dendritic or non-dendritic polymer network, including crosslinked non-dendritic polymer precursors, such as linear, cyclic, regularly branched, and randomly branched polymers.

Some examples representative of suitable hyperbranched polymers which can be used are compositions such as those described in US Patent 6,001,945 (December 14, 1999), while some examples of representative Combburst™ polymer compositions suitable for use herein are compositions such as are described in US Patent 5,773,527 (June 30, 1998), considered incorporated herein by reference. As noted in the '527 patent, Combburst™ polymer compositions are essentially non-crosslinked poly-branched polymers having a comb-burst configuration.

Interpenetrating polymer networks represent unique supramolecular constructs which combine and hold together, by permanent interlocked entanglements, two or more crosslinked polymer networks, regardless of their mutual compatibility. Due to the resulting interlocked configuration, the components of a true IPN cannot be separated without breaking of their covalent bonds. Furthermore, the size scale of their potential phase separation in the case of mutually incompatible partner networks, is usually very small and frozen, so that an IPN generally exhibits good dimensional stability over time, as well as a synergism of properties of the partner networks.

As a consequence, dendrimer-based IPNs according to this invention combine the desirable properties of the dendrimer molecular architecture, such as its ability to encapsulate small molecular guests as described in US Patent 5,938,934 (August 17, 1999), with properties which are specific to the other IPN component such as beneficial mechanical and electrical properties which a dendrimer-based network may or may not possess. In addition, incorporation of another component into dendrimer-based networks reduces the amount of the more expensive dendrimer per unit weight or volume of resulting IPN products, and thereby significantly impacts their economy.

Described herein is the preparation of PAMAMOS dendrimer-based IPNs with one synthetic and one natural derivatized polymer. Both of these two types of IPNs represent new classes of macromolecular architecture in which a dendrimer network is permanently interlocked with another network of linear polymer segments. IPNs according to this invention may also be prepared from radially layered copoly(propyleneamine-organosilicon) (PPIOS) dendrimer-based networks.

One method for the preparation of these IPNs involves an in situ sequential process in which all of the components are first mixed together, and the networks are then formed independently of each other at different crosslinking temperatures. In the examples which follow, the dendrimer network is formed first at a lower temperature, while the linear polymer network is then created by heating the resulting system to a higher temperature.

In the first phase of this in situ sequential process, the PAMAMOS dendrimer network is synthesized in the presence of the precursors for the second network at room temperature in essentially two steps. First, the methoxysilyl end groups of a dimethoxymethylsilyl terminated PAMAMOS dendrimer are hydrolyzed into reactive silanol groups using either atmospheric moisture or by the addition of water. The hydrolyzed PAMAMOS dendrimer is then allowed to undergo self-condensation either with or without the use of a catalyst. When a catalyst is employed, it can be any compound capable of promoting condensation reactions, examples of which are alkali metal hydroxides such as potassium hydroxide, alkali metal silanolates, alkali metal alkoxides, quaternary ammonium hydroxides, metal salts of organic acids such as dibutyltin dilaurate, stannous acetate, and stannous octanoate, mineral acids such as sulfuric and hydrochloric acid, organic acids such as acetic acid, organosulfonic acids, and ammonium compounds such as ammonium hydroxide. The catalyst most preferred is dibutyltin dilaurate.

This technique for the preparation of pure PAMAMOS dendrimer-based networks is described in detail in US Patent 5,902,863 (May 11, 1999).

If desired, crosslinking can include a coreagent which is a small molecular or oligomeric (i) difunctional reagent A₂, (ii) trifunctional reagent A₃, or (iii) polyfunctional reagent Aₓ where x is 4 or more. Representative A₂, A₃, and Aₓ reagents are for example, organohalosilanes, tetrahalosilanes, organosilanols, organo(organooxysilanes) such as dialkoxysilanes, trialkoxysilanes, tetralkoxysilanes, organo-H-silanes, organoaminosilanes, organoacyloxysilanes such as acetoxysilanes, organosilsesquioxanes, ureido-substituted silanes, vinyl-substituted silanes, and allyl-substituted silanes. Some specific examples of coreagents which can be used include trimethoxysilane (CH₃O)₃SiH, tetramethoxysilane Si(OCH₃)₄, triethoxysilane (C₂H₅O)₃SiH, tetraethoxysilane Si(OC₂H₅)₄, *α,ω*-telechelic siloxane disilanol oligomers, and *α*,*ω*-telechelic polysiloxane disilanols of different molecular weight. The function of such coreagents is to increase the density of the network crosslinks, or to separate the neighboring dendrimers. As used herein, the term "telechelic" is intended to mean a polymer that contains end groups that can react selectively to give bonds with other molecules.

At the end of the first phase in the preparation of the IPN, a dendrimer network is obtained that is swollen by the components subsequently used to form the second network.

To prepare the second network, some examples of monomers which can be used are methyl methacrylate (MMA) which leads to poly(methyl methacrylate) (PMMA), and cellulose acetobutyrate (CAB). With the former monomer, a linear segment network can be formed from the MMA monomer, 2,2'-azobisisobutyronitrile (AIBN) as the free radical initiator, and ethylene glycol dimethacrylate (EGDMA) as the crosslinking agent, by heating the mixture at 60 °C under nitrogen.

The amount of free radical initiator required is typically between 0.5-2 weight percent with respect to the amount of the MMA monomer. Free radical initiators other than AIBN can be used, for example, other azo compounds such as 4,4'-azo-4-cyanopentanoic acid (ACPA), peroxides such as hydrogen peroxide and alkyl peroxides, persulfates, peresters, and peracids.

Since PAMAMOS dendrimers, MMA, EGDMA, and AIBN, are all components which are soluble in methanol, in which PAMAMOS dendrimers are supplied, no other solvent is needed to perform this IPN synthesis. In addition, the free radical polymerization of MMA generally does not take place at room temperature, so that neither of these network forming reactions interfere with the other, which results in the formation of both networks independently.

In contrast to the above, the technique used with cellulose acetobutyrate (CAB) involves the use of preformed crosslinkable polymers instead of polymerizable monomers as employed above. In this instance, common solvents for the components such as chloroform can be employed. The dendrimer and the cellulose derivative are typically used in a solid dry form. One advantage of these types of IPNs is that they can be prepared by simple one pot reactions, since (i) both components are capable of reacting with coreagents such as tetramethoxysilane (TMOS), and (ii) the cellulose derivative employed typically is a preformed polymer. Therefore, coreagents such as TMOS are adequate for simultaneously crosslinking both the dendrimer and the linear polymer network.

An additional advantage of this latter type of IPN is that it was unexpectedly discovered that PAMAMOS dendrimers, in particular, can be crosslinked in linear cellulose acetobutyrate as uncrosslinked polymer matrices, and that this in turn yields semi-IPNs, and new macromolecular compositions.

According to this invention, therefore, IPNs can be prepared consisting of a PAMAMOS dendrimer network, and a PMMA or cellulose acetobutyrate network, in various relative weight proportions such as 1:1, 1:2, and 1:3. These IPNs are generally not affected by solvents, i.e., insoluble, indicating that they are truly crosslinked in character. They are also perfectly transparent, indicating their IPN characteristic and nanoscale compatibility. In addition, these IPNs exhibit a single glass transition temperature having a value between the value of the individual network components, the criteria generally accepted as true for network interpenetration.

The examples describe the general methods for preparation of dendrimer-based IPNs with PMMA and cellulose acetobutyrate. The formation of a semi-IPN is described in Example 8.

In each of the examples, the PAMAMOS dendrimer which was used was either a 100 percent dimethoxymethylsilyl (DMOMS) terminated derivative obtained from a generation 3 poly(amidoamine) (PAMAM) dendrimer precursor, or its corresponding derivative which containing 60 mole percent of DMOMS end groups and 40 mole percent of unmodified PAMAM dendrimer having -NH₂ surface groups. The dendrimers were present as 24-26 weight percent solutions in methanol, and were lyophilized to dryness before use. The reaction mixtures in the examples were prepared by starting from dry PAMAMOS dendrimer solids.

PAMAMOS DMOMS dendrimers were prepared according to the procedures described in detail in US Patent 5,739,218 (April 14, 1998), while the PAMAMOS dendrimer-based networks were prepared from the precursors as described in US Patent 5,902,863 (May 11, 1999).

All DSC scans, i.e., differential scanning calorimetry, in the following examples, were performed at a heating rate of 10 °C per minute.

### Example 1: Preparation of IPN from PAMAMOS Dendrimer and Polymethylmethacrylate (PMMA) in 1:1 Relative Weight Ratio

A reaction mixture was prepared in a two neck, round bottom, glass flask, by stirring with a Teflon® coated magnetic stirring bar, under a stream of nitrogen, 1 g methylmethacrylate (MMA), 1 g of a lyophilized PAMAMOS dendrimer, 0.02 g of azobisisobutyronitrile (AIBN), the initiator for the free radical polymerization of MMA, 20 µL ethylene glycol dimethacrylate (EGDMA) which is 2.1 weight percent relative to MMA, the EGDMA being the crosslinker for the PMMA network, and 40 µL dibutyltin dilaurate which is 4.2 weight percent relative to the dendrimer, the dibutyltin dilaurate being the catalyst for crosslinking the PAMAMOS dendrimer. The mixture was initially stirred at room temperature until the PAMAMOS network was first formed, as indicated by cessation of the stirring bar. The flask was then placed in a constant temperature oil bath, and the reaction mixture was heated to 60° C. The reaction mixture was kept at this temperature for another 6 hours to allow for the formation of the PMMA network. The composition obtained was optically clear and transparent, and showed a single glass transition temperature (Tg) at 19 °C as determined by differential scanning calorimetry (DSC). Under identical DSC conditions, the pure PAMAMOS and PMMA networks showed glass temperatures at -22 °C and 110 °C, respectively.

### Example 2: Preparation of IPN from PAMAMOS Dendrimer & PMMA in 1:1 Relative Weight Ratio with 9.6 Weight Percent of an α,ω-telechelic Polydimethylsiloxane Disilanol having a Molecular Weight (MW) of 400-700

A reaction mixture was prepared in a two neck, round bottom, glass flask, by stirring with a Teflon® coated magnetic stirring bar, under a stream of nitrogen, 1 g of MMA, 1 g of a lyophilized PAMAMOS dendrimer, 0.212 g of an α,ω-disilanol polydimethylsiloxane with a MW of 400-700 and containing 12.6 mole percent of Si-OH groups relative to SiOCH₃ groups of the PAMAMOS dendrimer, 0.02 g of AIBN, 20 µL of EGDMA, and 40 µL of dibutyltin dilaurate. The mixture was transferred via a syringe into a mold consisting of two silylated glass plates clamped together and separated by a 250 µm thick Teflon® gasket. The mold was kept at room temperature until a gel formed as indicated by visual inspection after 3 hours, and then it was placed into an oven and heated at 60 °C for another 10 hours. The composition obtained was a clear and transparent film which easily released from the mold. It had a single Tg at -13 °C as determined by DSC.

### Example 3: Preparation of IPNs (a) and (b) from PAMAMOS Dendrimers and PMMA in (a) 1:2 and (b) 1:3 Relative Weight Ratios with (a) 6.6 Weight Percent and (b) 5.3 Weight Percent of an α,ω)-telechelic Polydimethylsiloxane Disilanol (Mw of 400-700)

A reaction mixture was prepared in a two neck, round bottom, glass flask, by stirring with a Teflon® coated magnetic stirring bar, under a stream of nitrogen, 1 g of a lyophilized PAMAMOS dendrimer, 0.212 g of an α,ω-telechelic polydimethylsiloxane disilanol with a Mw of 400-700 and containing 12.6 mole percent of Si-OH groups relative to the SiOCH₃ groups of the PAMAMOS dendrimer, (a) 2 g or (b) 3 g of MMA, 0.02 g of AIBN, 40 µL of EGDMA, and 40 µL of dibutyltin dilaurate. The flask was closed with a rubber septum, and the mixture was stirred at 25 °C in a constant temperature bath until the dendrimer network formed. This was indicated by stoppage of the magnetic stirrer, which occurred in 4.5 hours in the case of IPN (a) and in 20 hours in the case of IPN (b). The temperature was then raised to 60 °C and the mixture was kept at that temperature for another 10 hours in each instance to allow for the formation of the PMMA network. The two compositions were each perfectly transparent and clear. IPN (a) had a Tg of -5 °C as determined by DSC, and IPN (b) had a Tg of 17 °C as determined by DSC.

### Example 4: Preparation of an IPN from PAMAMOS dendrimer and PMMA in 1:1 Relative Weight Ratio with 38.1 Weight Percent of an α,ω-Disilanol Polydimethylsiloxane (Mw of 400-700)

A reaction mixture was prepared in a two neck, round bottom, glass flask, by stirring with a Teflon® coated magnetic stirring bar, under a stream of nitrogen, 1 g of a lyophilized PAMAMOS dendrimer, 1.23 g of an α,ω-telechelic polydimethylsiloxane disilanol having a molecular weight of 400-700 and containing 72.9 mole percent of Si-OH groups relative to the SiOCH₃ groups of the PAMAMOS dendrimer, 1 g of MMA, 0.02 g of AIBN, 20 µL of EGDMA, and 40 µL of dibutyltin dilaurate. The flask was closed with a rubber septum, and the mixture was stirred at 25 °C in a constant temperature bath until the dendrimer network formed. This was indicated by stoppage of the magnetic stirrer. The temperature was then raised to 60 °C, and the mixture was kept at that temperature for another 6 hours to allow for the formation of the PMMA network. The resulting composition was optically translucent, and it had a Tg of -18 °C as determined by DSC.

### Example 5: Preparation of IPN from PAMAMOS dendrimer and PMMA in 1:1 Relative Weight Ratio with 5.5 Weight Percent of Tetraethoxysilane (TEOS)

A reaction mixture was prepared in a two neck, round bottom, glass flask, by stirring with a Teflon® coated magnetic stirring bar, under a stream of nitrogen, 1 g of a lyophilized PAMAMOS dendrimer, 0.116 g of tetraethoxysilane which is 36.4 mole percent of SiOC₂H₅ groups relative to the SiOCH₃ groups of the PAMAMOS dendrimer, 1 g of MMA, 0.02 g of AIBN, 20 µL of EGDMA, and 40 µL of dibutyltin dilaurate. The flask was closed with a rubber septum, and the mixture was stirred at 25 °C in a constant temperature bath until the dendrimer network formed. This was indicated by stoppage of the magnetic stirrer. The temperature was then raised to 60 °C, and the reaction mixture was kept at that temperature for another 6 hours, to allow for the formation of the PMMA network. The obtained composition was perfectly clear and transparent, and it had a Tg at 12 °C.

### Example 6: Preparation of IPN from PAMAMOS Dendrimer and Cellulose Acetobutyrate in 1:1 Relative Weight Ratio with 3.8 Weight Percent of Tetramethoxysilane TMOS

A reaction mixture was prepared in a two neck, round bottom, glass flask, by stirring with a Teflon® coated magnetic stirring bar, under a stream of nitrogen, 1 g of a lyophilized PAMAMOS dendrimer, 1 g of cellulose acetobutyrate containing 56 mole percent of modified OH groups, 0.08 g of tetramethoxysilane which is 47 mole percent of SiOCH₃ groups relative to the free OH groups of the cellulose acetobutyrate, the TMOS functioning as crosslinking reagent for both the cellulose acetobutyrate and the PAMAMOS dendrimer, and 28 µL dibutyltin dilaurate, in 12 mL of chloroform, which is 1.5 weight percent of the total weight of the mixture, the dibutyltin dilaurate being the catalyst for crosslinking of both the cellulose acetobutyrate and the PAMAMOS dendrimer. The homogenized mixture was cast onto a silylated glass plate which was then placed uncovered in a nitrogen flushed oven, and kept there for 25 hours at 55 °C. After an hour of drying under partial vacuum, a transparent film was obtained which released easily from the glass substrate. It had a Tg of 33 °C as determined by DSC.

### Example 7: Preparation of IPN from PAMAMOS Dendrimer and Cellulose Acetobutyrate in (a) 1:2 and (b) 1:3 Relative Weight Ratios with 5.0 Weight Percent of Tetramethoxysilane (TMOS)

A reaction mixture was prepared in a two neck, round bottom, glass flask, by stirring with a Teflon® coated magnetic stirring bar, under a stream of nitrogen, 1 g of a lyophilized PAMAMOS dendrimer, (a) 2 g and (b) 3 g of cellulose acetobutyrate containing 56 mole percent of modified OH groups, (a) 0.16 g and (b) 0.24 g of TMOS which is 47 mole percent of SiOCH₃ from the TMOS relative to the free OH groups of the cellulose acetobutyrate, (a) 56 µL and (b) 84 µL of dibutyltin dilaurate in 12 mL chloroform, (a) being 2 and (b) being 2.2 weight percent with respect to the total mass of the reaction mixture. The homogenized mixture was cast onto a silylated glass plate which was then placed uncovered in a nitrogen flushed oven, and kept there for 20 hours at 55 °C. After an hour of drying under partial vacuum, a transparent film was obtained which strongly adhered to the glass plate. IPN (a) had a Tg of 60 °C as determined by DSC, and IPN (b) had a Tg of 93 °C as determined by DSC.

### Example 8: Preparation of semi-IPN from PAMAMOS Dendrimer and Cellulose Acetobutyrate in 1:1 Relative Weight Ratio

A reaction mixture was prepared in a two neck, round bottom, glass flask, by stirring with a Teflon® coated magnetic stirring bar, under a stream of nitrogen, 1 g of a lyophilized PAMAMOS dendrimer, 1 g of cellulose acetobutyrate containing 54 mole percent of modified OH groups, and 5 mL of dichloromethane. The homogenized mixture was cast onto a silylated glass plate which was then placed uncovered in a nitrogen flushed oven, and kept there for 4 hours at 25 °C. After an additional 3 hours at 60 °C, the resulting film was transparent and released easily from the glass substrate. It had a Tg of 27 °C as determined by DSC.

### Example 9: Complexation of Copper Sulfate by IPNs

Small samples of 0.01 g of the IPNs prepared in Examples 1-8 were soaked in 0.01 g/mL (a) aqueous and (b) methanol solutions of CuSO₄ for 12 hours. A negligible uptake of CuSO₄ was observed for all samples soaked in (a) the aqueous solutions, while those soaked in (b) the methanol solution changed from clear, colorless films, into clear, blue-green colored films, which indicated formation of Cu²⁺ complexes. It was noted that the absorption of CUSO₄ was quicker for the PAMAMOS/cellulose acetobutyrate IPNs than for the PAMAMOS/PMMA IPNs.

Example 9 represents the ability of these dendrimer containing IPNs to encapsulate small molecular guests. In particular, it illustrates their utility in adsorbing, absorbing, or encapsulating, a variety of electrophilic organic, inorganic, or organometallic species, such as metal cations, metal salts, metal oxides, elemental metals, water soluble organic molecules, and water soluble organometallic molecules.

Thus, IPNs according to this invention are useful in (i) structures in which they can be permanently bound, (ii) structures having tailor made mechanical properties which are provided by the second or non-dendrimer partner, and (iii) structures which are optically perfectly clear and transparent. Representative applications, therefore, include the use of these IPNs in industrial sectors such as electronics for the manufacture of lightweight computers and screens, optical instruments, and optical, corrective and therapeutic lenses.

## Claims

1. A composition of matter comprising an interpenetrating polymer network (IPN) containing two or more polymer components, at least one polymer component being a network in the form of a dendrimer or dendritic polymer; the other polymer component being selected from dendrimers, dendritic polymers,
hyperbranched polymers, non-crosslinked poly-branched polymers having comb-burst configuration, regularly branched polymers, randomly branched polymers, and linear polymers; the network polymer component being synthesized or crosslinked in the presence of the other polymer component.

2. A composition according to Claim 1 in which the IPN is a full IPN, a sequential IPN, a simultaneous IPN, a thermoplastic IPN, a semi-IPN, or a pseudo-IPN.

3. A composition according to Claim 2 in which the IPN is a full IPN in which there are no induced crosslinks between the polymer components.

4. A composition according to Claim 2 in which the IPN is a sequential IPN in which one of the polymer components is swollen in the monomer for the other polymer component, a crosslinking agent, and initiator, and the monomer for the other polymer component is polymerized in situ.

5. A composition according to Claim 2 in which the IPN is a simultaneous IPN in which the monomers for the polymer components, their respective crosslinking agents and initiators, are polymerized simultaneously by means of noninterfering modes.

6. A composition according to Claim 2 in which the IPN is a thermoplastic IPN in which the polymer components are thermoplastic.

7. A composition according to Claim 2 in which the IPN is a semi-IPN, or a pseudo-IPN, in which one polymer component is crosslinked, and the other polymer component is linear.

8. A composition according to any of Claims 1 to 7, in which the polymer network component of the IPN is a radially layered copoly(amidoamine-organosilicon) dendrimer-based network or a radially layered copoly(propyleneamine-organosilicon) dendrimer-based network.

9. A composition according to any of Claims 1 to 8, in which the other polymer component of the IPN is a crosslinked poly(methyl-methacrylate)or cellulose acetobutyrate network.

10. A composition according to any of Claims 1 to 9, in which the synthesis or crosslinking includes a coreagent selected from organohalosilanes,
tetrahalosilanes, organosilanols,
organo(organooxysilanes), organo-H-silanes,
organoaminosilanes, organoacyloxysilanes,
organosilsesquioxanes, ureido-substituted silanes, vinyl-substituted silanes, and allyl-substituted silanes.
